(19) Europäisches Patentamt / European Patent Office / Office européen des brevets

(11) **EP 2 127 903 B1**

(12) **EUROPEAN PATENT SPECIFICATION**

(45) Date of publication and mention
of the grant of the patent:
**08.05.2013 Bulletin 2013/19**

(51) Int Cl.:
***B60C 9/18*** *(2006.01)*     ***B60C 9/20*** *(2006.01)*
***B60C 9/22*** *(2006.01)*     ***D07B 1/06*** *(2006.01)*

(21) Application number: **08722296.4**

(22) Date of filing: **17.03.2008**

(86) International application number:
**PCT/JP2008/054902**

(87) International publication number:
**WO 2008/114778 (25.09.2008 Gazette 2008/39)**

(54) **TIRE FOR TWO-WHEELED VEHICLE**

REIFEN FÜR ZWEIRÄDRIGES FAHRZEUG

PNEU POUR VÉHICULE À DEUX ROUES

(84) Designated Contracting States:
**AT BE BG CH CY CZ DE DK EE ES FI FR GB GR
HR HU IE IS IT LI LT LU LV MC MT NL NO PL PT
RO SE SI SK TR**

(30) Priority: **20.03.2007 JP 2007073310**

(43) Date of publication of application:
**02.12.2009 Bulletin 2009/49**

(73) Proprietor: **Bridgestone Corporation
Tokyo 104-8340 (JP)**

(72) Inventor: **IKEHARA, Kiyoshi
Kodaira-shi
Tokyo 187-0031 (JP)**

(74) Representative: **Waldren, Robin Michael et al
Marks & Clerk LLP
90 Long Acre
London
WC2E 9RA (GB)**

(56) References cited:
**WO-A1-2007/083761      JP-A- 11 254 907
JP-A- 2001 040 590      JP-A- 2001 130 214
JP-A- 2004 520 217      US-A- 5 332 017**

**Description**

Technical Field

The present invention relates to a tire for a two-wheeled vehicle (hereinafter, referred to also as "tire") and, more specifically, to a pneumatic radial tire for a motorcycle provided for a high-performance motorcycle which is generally referred to as a super sport type, and is subjected to a high-speed cornering drive, and is a low flat pneumatic radial tire for a high-performance motorcycle in which steering stability at the time of high-speed cornering is improved while maintaining various performances such as high-speed durability and straight-ahead driving stability.

Background Art

Attention is drawn to the disclosure of US 5,332,017A.

In the related art, so-called a spiral belt layer formed by winding a belt member formed by embedding one or more cords arranged in parallel in covering rubber at an angle directed substantially in a circumferential direction of a tire spirally in the direction of an axis of rotation of the tire is applied to a tire for a two-wheeled vehicle to improve high-speed durability, straight-ahead driving stability, uniformity performance, acceleration performance of the tire, and so on.

As a technology relating to improvement of a steel cord as a reinforcing member of the spiral belt layer as described above, for example, Patent Document 1 discloses a radial tire for a motorcycle in which wear resistance is improved without lowering straight-ahead driving performance and cornering performance during a high-speed travelling significantly and maintaining handling performance by specifying tensile elongation of a belt cord formed of a spirally wound steel cord to a predetermined value. Also, Patent Document 2 discloses a radial tire for a motorcycle which is specified by a load-elongation curve of a band cord which constitutes a spirally wound belt-shaped ply.

Patent Document 1: Japanese Unexamined Patent Application Publication No. 4-362402.
Patent Document 2: Japanese Unexamined Patent Application Publication No. 2001-130218.

Disclosure of Invention

Problems to be Solved by the Invention

However, when the spiral belt layer is applied to the tire for a two-wheeled vehicle, although the improvement of the various tire performances as described above is achieved, a reaction to a change of the direction of the vehicle becomes dull, so that there arises a problem of loss of liveliness. Therefore, a technology to improve the tire which secures cornering controllability (cornering performance) while improving the high-speed durability, the straight-ahead driving stability, the uniformity performance, the acceleration performance and the like as described above has been demanded.

Accordingly, it is an object of the present invention to provide a tire for a two-wheeled vehicle in which cornering controllability (cornering performance) is improved without impairing various performances of the tire such as straight-ahead driving performance, high-speed ability, ride comfort, and uniformity.

Means for Solving the Problems

After having devoted himself to study a technology to improve cornering performance in a tire for a two-wheeled vehicle having a spiral belt layer as described above, the inventor of the present invention has achieved an accomplishment of the present invention by finding the fact that enhancement of flexural rigidity of the spiral belt layer as a circumferential belt is important for improving the cornering performance.

In other words, a tire for a two-wheeled vehicle according to the present invention includes a tread portion; a pair of side wall portions disposed radially inside the tire from both edges of the tread portion; and bead portions continuing radially inside the tire of the side wall portions, and includes a carcass layer including at least one layer of carcass ply for reinforcing these portions between bead cores embedded in the bead portions and being formed by covering a cord forming an angle of 60 to 90° with respect to an equatorial plane of the tire with rubber; and at least one layer of spiral belt formed outside the carcass layer in the radial direction of the tire by spirally wound so as to extend substantially in parallel to the circumferential direction of the tire, wherein the spiral belt layer includes a steel-rubber compound material formed by embedding one or more spirally shaped steel element wires without twisting with each other in rubber and the element wire diameter of the steel element wires is in a range from 0.25 mm to 0.60 mm.

In the tire for a two-wheeled vehicle in the present invention, preferably, a residual stress amount Rs of a surface layer portion of the steel element wire satisfies a relationship of $Rs < 0$. Also, in the present invention, the spiral belt layer is formed of a steel-rubber compound material formed by embedding two or more steel element wires shaped spirally with a substantially same pitch into rubber substantially in the same phase with each other in a form of being bound but not twisted with each other. In this case, circumscribing circles of the shaped spiral of a given one of the steel element wires and at least one other steel element wire(s) are preferably overlapped, and the element wire diameter and the shaped amount of the two or more steel element wires are all the same. Also, preferably, L defined by the following expression;

$$L = \sqrt{(1 + (D-d)^2\pi^2/P^2)} - 1 \quad (1)$$

satisfies an inequality of 0.1>L>0.005 where D is a circumscribing circle diameter of the shaped spiral of the steel element wire, P is a spiral pitch P, and d is the element wire diameter of the steel element wire.

Advantages of the Invention

According to the present invention, with the configuration as described above, the realization of the tire for a two-wheeled vehicle in which cornering controllability (cornering performance) is improved without impairing various performances of the tire such as straight-ahead driving performance, high-speed ability, ride comfort, and uniformity is achieved.

Brief Description of Drawings

Fig. 1 is a schematic cross-sectional view showing an example of a pneumatic radial tire for a motorcycle according to the present invention.
Fig. 2 is a cross-sectional view showing a cord portion in a preferable example of a steel-rubber compound material according to the present invention.
Fig. 3 is a cross-sectional view showing a cord portion of a steel-rubber compound material according to example 2.

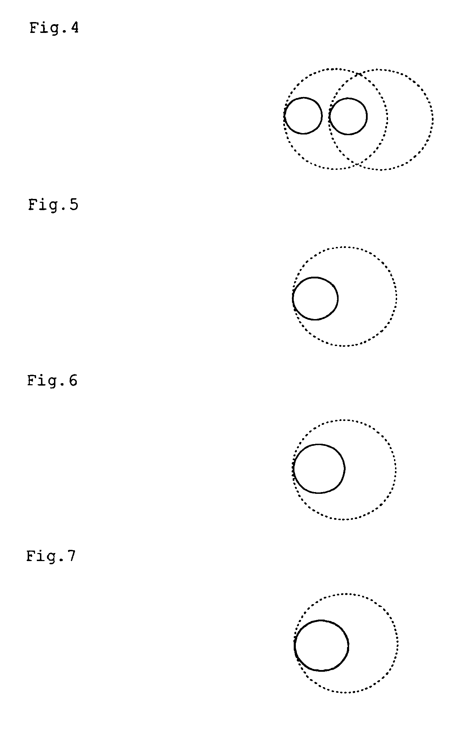

Fig. 4 is a cross-sectional view showing a cord portion of a steel-rubber compound material according to example 3.
Fig. 5 is a cross-sectional view showing a cord portion of a steel-rubber compound material according to example 4, which does not form part of the invention.
Fig. 6 is a cross-sectional view showing a cord portion of a steel-rubber compound material according to example 5, which does not form part of the invention.
Fig. 7 is a cross-sectional view showing a cord portion of a steel-rubber compound material according to example 6, which does not form part of the invention.

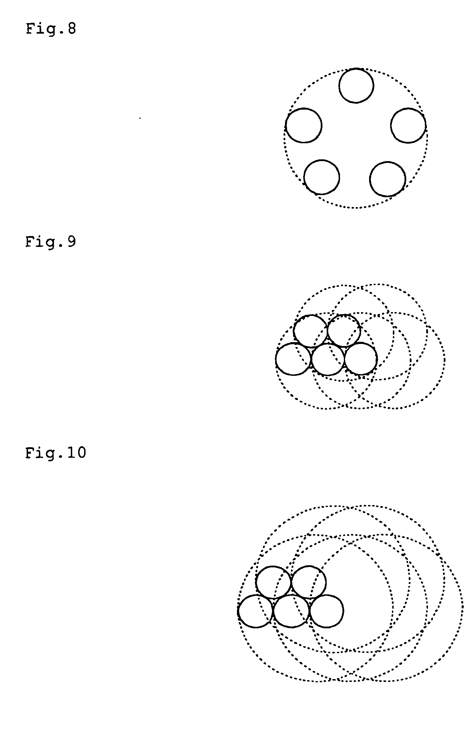

Fig. 8 is a cross-sectional view showing a cord portion of a steel-rubber compound material according to comparative example 1.
Fig. 9 is a cross-sectional view showing a cord portion of a steel-rubber compound material according to comparative example 2.
Fig. 10 is a cross-sectional view showing a cord portion of a rubber-steel cord compound material according to comparative example 3.
Fig. 11 is a cross-sectional view showing a cord portion of a rubber-steel cord compound material according to comparative example 4.
Fig. 12 is an explanatory drawing showing a method of measuring a residual stress amount according to the examples.

Reference Numerals

| 1 | steel element wire |
| 11 | tread portion |
| 12 | side wall portion |
| 13 | bead portion |
| 21 | bead core |
| 22 | carcass layer |
| 23 | spiral belt layer |

| 100 | steel element wire |
|---|---|

Best Modes for Carrying Out the Invention

Preferable embodiments of the present invention will be described in detail.

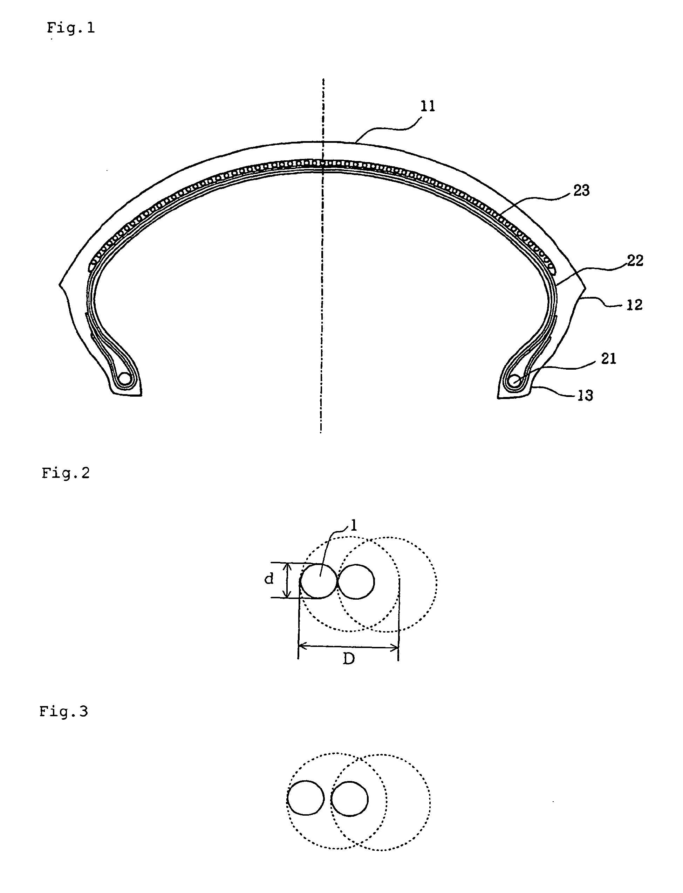

Fig. 1 is a schematic cross-sectional view of an example of a tire for a two-wheeled vehicle according to the present invention. As shown in the drawing, the tire in the present invention includes a tread portion 11; a pair of side wall portions 12 disposed radially inside the tire from both edges thereof; and bead portions 13 continuing radially inside the tire, and includes a carcass layer 22 including at least one layer of carcass ply for reinforcing these portions between bead cores 21 embedded in the bead portions 13 and being formed by covering a cord forming an angle of 60 to 90° with respect to an equatorial plane of the tire with rubber; and at least one layer of a spiral belt layer 23 formed outside the carcass layer in the radial direction of the tire by spirally wound so as to extend substantially in parallel to the circumferential direction of the tire.

According to the present invention, it is important that the spiral belt layer 23 as described above is formed of a steel-rubber compound material by embedding one or more, preferably one to five spirally shaped steel element wires in the rubber without twisting the same with each other, and the element wire diameter of the steel element wires is set in a range from 0.25 mm to 0.60 mm, more specifically, in a range from 0.30 mm to 0.42 mm. It is based on the following reasons.

In the two-wheeled vehicle, at the time of cornering, the vehicle is inclined to cause the tire to generate a camber force so that the cornering is achieved. When the camber force generating mechanism is closely studied, it is considered that the camber force is generated by a shear strain caused by a deviation between a direction of travel of a circumferential belt (that is, a spiral belt layer) rotating circumferentially of the tire and a direction of travel of a tread rubber grounding on a road surface and following the direction of the road surface, and if flexural rigidity of the circumferential belt is low, following of the direction of the road surface tends to occur, and hence the generation of the camber force is lowered. Therefore, by increasing the element wire diameter of the steel element wire used for the spiral belt layer by 0.175 mm to 0.22 mm in the related art and using a steel element wire having the element wire diameter of 0.25 mm to 0.60 mm having a higher flexural rigidity, the camber force described above can be enhanced, whereby improvement of cornering performance is enabled.

However, if the element wire diameter of the steel element wire is too much increased, exceeding 0.60 mm, manufacture stability is deteriorated such that it stays in the shape of being wound, so that it is set to 0.60 mm at the maximum.

In contrast, in order to secure the cornering performance, vibration absorption and molding workability simultaneously, it is necessary to provide the steel element wire with the spiral shape for keeping flexural rigidity at a high level and lowering tension and compression rigidity. Therefore, in the present invention, a steel-rubber compound material having one or more spirally shaped steel element wires embedded in the rubber without twisting with each other is applied to the spiral belt layer 23.

Also, in order to secure a sufficient fatigue life without depending on the environment of the usage of the tire, it is preferable to set a residual stress amount Rs of a surface layer portion of the steel element wire used in the spiral belt layer to Rs<0. Here, being Rs<0, that is, the residual stress amount Rs smaller than zero means that the residual stress in the surface layer portion of the steel element wire is applied in the direction of compression.

In addition, in order to avoid easy contact between the adjacent steel element wires the spiral shapes of the steel element wires are made to have substantially the same pitch. More specifically, a steel-rubber compound material formed by embedding two or more spirally formed steel element wires wound with a substantially same pitch into rubber substantially in the same phase with each other in a form of being bound but not twisted are used.

In this case, for example, as shown in Fig. 2, it is preferable to make a state in which circumscribing circles of the shaped spirals of a given one of a steel element wire 1 and at least one other steel element wire(s) 1 preferably overlap with each other, whereby high-rigidity and high strength are obtained.

It is also preferable that all of the element wire diameters and the shaped amounts of the two or more steel element wires are set to be the same, whereby a stress is applied uniformly to the respective steel element wires, so that strength efficiency is improved.

In addition, in the present invention, it is preferable to set L defined by the following expression;

$$L = \sqrt{(1 + (D-d)^2 \pi^2 / P^2)} - 1 \quad (1),$$

where the diameter of the circumscribing circle of the shaped spiral of the steel element wire 1 is D (mm), the spiral pitch is P (mm), and the element wire diameter of the steel element wire is d (mm) (see Fig. 2),
to satisfy 0.1 > L > 0.005, thereby a desirable molding workability is secured and, simultaneously, the cornering performance is sufficiently achieved.

As a method of manufacturing the steel-rubber compound material having two or more steel element wires stably and efficiently according to the present invention, for example, a method of binding a plurality of steel element wires wound around separate reels by passing the same through one pipe sleeve to form a steel cord, coating the steel cord with rubber and then embedding into a rubber compound material, or a method of manufacturing the same by binding a plurality of steel element wires wound around separate reels by passing the same through one slit to form a steel cord, contact-bonding rubber with respect to the steel cord from above and below, and embedding the steel cord in the rubber compound material is effective.

As the steel-rubber compound material used in the present invention, as long as the conditions about the cord structure described above are satisfied, other details such as cord structures or materials of the steel and the rubber to be used are not specifically limited.

Also, in the tire for a two-wheeled vehicle in the present invention, as long as the steel-rubber compound material which satisfies the above-described characteristics is applied to the spiral belt layer of the tire, other tire structures or the materials of other components are not specifically limited, and a desired effect of the present invention can be obtained.

Examples

On the basis of examples 1 to 3, the present invention will be described further in detail.

Steel-rubber compound materials are manufactured using steel element wires (brass plating; Cu 63 weight %, Zn 37 weight %) shaped with the shaped amount and pitches shown in Tables 1 and 2 shown below under the conditions shown in Tables 1 and 2. As a coating rubber, a rubber composition containing 100 parts by weight of natural rubber (NR), 55 parts by weight of carbon black (HAF), 7 parts by weight of zinc oxide (ZnO), 5 parts by weight of sulfur, and 0.1 parts by weight of Co salt (cobalt naphthenate) was used.

<Measurement of Residual Stress Amount Rs in the Surface Layer Portion>

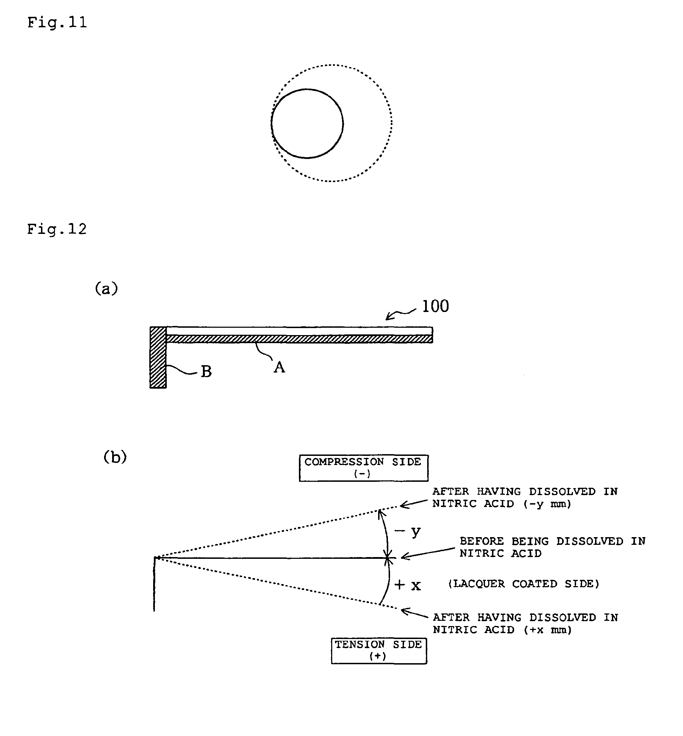

Obtained steel-rubber compound materials were cut respectively in the lengthwise direction into a length of 10 cm, were sleeved into element wires, brass plating was removed by using solution of Ammonium hypersulfate, then, as shown in Fig. 12(a), a half-round portion A of each of the element wires 100 in the lengthwise direction is coated with lacquer so as to prevent from being etched, and an end portion B thereof is coated with lacquer over the entire circumference thereof. Subsequently, etching was performed with nitric acid of 50% by volume at 50°C and the amount of bent when bent of the element wire reaches a maximum value with reference to the end portion B was determined as the residual stress amount. Determination whether the residual stress was compression or tension was made in such a manner that it was determined to be compression (-) when the element wire was bent in the etched side, and it was determined to be tension (+) when it was bent toward the side coated with the lacquer (see Fig. 12(b)). The results are shown in Table 1 below together with the value of L obtained from the circumscribing circle diameter D, the spiral pitch P, and the element wire diameter d of the steel element wire according to the expression (1).

Also, the obtained respective steel-rubber compound materials were applied to a spiral belt layer of a pneumatic radial tire for a motorcycle having a spiral belt structure shown in Fig. 1 (MC tire) (tire size: 190/50ZR17) with a embedded number of 40/50 mm, and evaluation was performed as follows about the vibration absorption, the cornering performance, and fatigue characteristics. The results of the evaluation are also shown in Table 1.

<Vibration Absorption, Cornering performance>

Tires under test were mounted on a sport type two-wheeled vehicle of 100cc at an air pressure of 250 kPa with a rim having a rim size MT6.00 x 17, a mounted-on-vehicle feeling test was conducted, and the vibration absorption at the time of straight-ahead driving and the cornering performance at the time of cornering were evaluated based on a scale of 10. Scores of 7 points or higher were accepted.

<Fatigue Characteristic>

An inner liner of the tire under test was peeled off, water is filled in the tire, a drum traveling at a low internal pressure was performed by 15000 km, the belt cord of the tire was taken out, and those in which breakage of the cord was occurred were determined as being not acceptable (×) and those in which it was not occurred were determined as being acceptable (O).

<Molding Workability>

The steel element wires which do not cause circumstances which might impair the productivity such that dropout of the steel element wire compound material from a path when using the steel element wires after having left to stand in a state of being wound around the reel for three months after the manufacture of the steel element wires, and allow molding at a normal speed were determined as being acceptable (○).

[Table 1]

| | | Comparative Example 1 | Comparative Example 2 | Comparative Example 3 | Comparative Example 4 |
|---|---|---|---|---|---|
| Cord Type | | Open *1 | Non-twisting | Non-twisting | Non-twisting |
| Cord Structure | | 1 × 5 × 0.21 mm | 0.21 mm × 5 bundles | 0.21 mm × 5 bundles | 0.7 mm |
| Corresponding Drawing | | Fig. 8 | Fig. 9 | Fig. 10 | Fig. 11 |
| Diameter D (mm) of Circumscribing Circle of Shaped Spiral | | 0.83 | 0.83 | 1.6 | 1 |
| Spiral Pitch P (mm) | | 9 | 9 | 9 | 15 |
| Element Wire Diameter d (mm) | | 0.21 | 0.21 | 0.21 | 0.7 |
| Residual Stress Rs on Element Wire Surface | | − | − | − | + |
| L (%) *2 | | 2.32 | 2.32 | 11.15 | 0.20 |
| Performance Evaluation | Vibration Absorption | 7 | 8 | 8 | 4 |
| | Cornering performance | 4 | 5 | 3 | 8 |
| | Fatigue Characteristic | ○ | ○ | ○ | × |
| | Molding Workability | ○ | ○ | ○ | × |

*1) Structure having gaps between filaments which constitute a cord

*2) value according to the above-described expression (1) × 100 (%)

[Table 2]

| | Example 1 | Example 2 | Example 3 | Example 4 | Example 5 | Example 6 |
|---|---|---|---|---|---|---|
| Cord Type | Non-twisting | Non-twisting | Non-twisting | Non-twisting | Non-twisting | Non-twisting |
| Cord Structure | 0.26 mm × 2 bundles | 0.30 mm × 2 bundles | 0.30 mm × 2 bundles | 0.34 mm | 0.42 mm | 0.6 mm |
| Corresponding Drawing | Fig. 2 | Fig. 3 | Fig. 4 | Fig. 5 | Fig. 6 | Fig. 7 |
| Diameter D (mm) of Circumscribing Circle of Shaped Spiral | 0.83 | 0.83 | 0.7 | 0.83 | 0.83 | 1.3 |
| Spiral Pitch P (mm) | 9 | 9 | 9 | 10 | 11 | 15 |
| Element Wire Diameter d (mm) | 0.26 | 0.3 | 0.3 | 0.34 | 0.42 | 0.6 |
| Residual Stress Rs on Element Wire Surface | – | – | – | – | – | – |
| L (%)*2 | 1.96 | 1.70 | 0.97 | 1.18 | 0.68 | 1.07 |
| Performance Evaluation — Vibration Absorption | 8 | 8 | 8 | 8 | 7 | 7 |
| Performance Evaluation — Cornering performance | 7 | 8 | 9 | 8 | 8 | 8 |
| Performance Evaluation — Fatigue Characteristic | O | O | O | O | O | O |
| Performance Evaluation — Molding Workability | O | O | O | O | O | O |

As shown in Tables 1 and 2, in the tires according to the examples in which the steel-rubber compound material which satisfies predetermined conditions according to the present invention, it was confirmed that improvement of the cornering performance is achieved without impairing the vibration absorption or the fatigue characteristic.

**Claims**

1. A tire for a two-wheeled vehicle comprising: a tread portion (11); a pair of side wall portions (12) disposed radially inside the tire from both edges of the tread portion; bead portions (13) continuing radially inside the tire of the side wall portions; a carcass layer (22) including at least one layer of carcass ply for reinforcing these portions between bead cores (21) embedded in the bead portions and being formed by covering a cord forming an angle of 60 to 90° with respect to an equatorial plane of the tire with rubber; and at least one layer of spiral belt (23) formed outside the carcass layer in the radial direction of the tire by spirally wound so as to extend substantially in parallel to the circumferential direction of the tire,

   the spiral belt layer including a steel-rubber compound material formed by embedding one or more spirally shaped steel element wires (1, 100) without twisting with each other in rubber and the element wire diameter of the steel element wire being in a range from 0.25 mm to 0.60 mm, **characterised in that**

   the spiral belt layer is formed of a steel-rubber compound material formed by embedding two or more steel element wires shaped spirally with a substantially same pitch into rubber substantially in the same phase with each other in a form of being bound but not twisted with each other.

2. The tire for a two-wheeled vehicle according to Claim 1, wherein a residual stress amount Rs of a surface layer portion of the steel element wire satisfies Rs<0.

3. The tire for a two-wheeled vehicle according to any preceding Claim, wherein circumscribing circles of the shaped spiral of a given one of the steel element wires and at least one other steel element wire are overlapped with each other.

4. The tire for a two-wheeled vehicle according to any preceding Claim, wherein the element wire diameter and the shaped amount of the two or more steel element wires are all the same.

5. The tire for a two-wheeled vehicle according to Claim 1, wherein L defined by the following expression;

$$L = \sqrt{(1 + (D\text{-}d)^2 \pi^2/P^2)} - 1 \qquad (1)$$

   satisfies an inequality of 0.1>L>0.005 where D is a circumscribing circle diameter of the shaped spiral of the steel element wire, P is a spiral pitch, and d is the element wire diameter of the steel element wire.

**Patentansprüche**

1. Reifen für ein zweirädriges Fahrzeug, der aufweist: einen Laufflächenabschnitt (11); ein Paar Seitenwandabschnitte (12), die radial innerhalb des Reifens von beiden Rändern des Laufflächenabschnittes aus angeordnet sind; Wulstabschnitte (13), die sich radial innerhalb des Reifens von den Seitenwandabschnitten fortsetzen; eine Karkassenlage (22); die mindestens eine Lage einer Karkasseneinlage für das Verstärken dieser Abschnitte zwischen den in den Wulstabschnitten eingebetteten Wulstkernen (21) umfasst, und die durch Bedecken eines Kordes, der einen Winkel von 60 bis 90° mit Bezugnahme auf eine Äquatorebene des Reifens bildet, mit Gummi gebildet wird; und mindestens eine Lage des spiralförmigen Gürtels (23), der außerhalb der Karkassenlage in der radialen Richtung des Reifens durch spiralförmiges Wickeln so gebildet wird, dass sie sich im Wesentlichen parallel zur Umfangsrichtung des Reifens erstreckt,

   wobei die spiralförmige Gürtellage ein Stahl-Gummi-Verbundmaterial umfasst, das durch Einbetten von einem oder mehreren spiralförmigen Stahlelementdrähten (1, 100) ohne Verdrehen miteinander im Gummi geformt wird, und wobei der Elementdrahtdurchmesser des Stahlelementdrahtes in einem Bereich von 0,25 mm bis 0,60 mm liegt, **dadurch gekennzeichnet, dass**

   die spiralförmige Gürtellage aus einem Stahl-Gummi-Verbundmaterial gebildet wird, das durch Einbetten von zwei oder mehreren Stahlelementdrähten, die spiralförmig mit einem im Wesentlichen gleichen Abstand geformt sind, im Gummi im Wesentlichen in der gleichen Phase miteinander in einer Form ausgebildet ist, in der sie verbunden aber nicht miteinander verdreht sind.

2. Reifen für ein zweirädriges Fahrzeug nach Anspruch 1, bei dem ein Restspannungswert Rs eines Oberflächenlagenabschnittes des Stahlelementdrahtes Rs < 0 erfüllt

3. Reifen für ein zweirädriges Fahrzeug nach einem der vorhergehenden Ansprüche, bei dem Umkreise der geformten Spirale eines bestimmten der Stahlelementdrähte und mindestens eines weiteren Stahlelementdrahtes miteinander überlagert sind.

4. Reifen für ein zweirädriges Fahrzeug nach einem der vorhergehenden Ansprüche, bei dem der Elementdrahtdurchmesser und der Formwert der zwei oder mehreren Stahlelementdrähte alle die gleichen sind.

5. Reifen für ein zweirädriges Fahrzeug nach Anspruch 1, bei dem L, das durch den folgenden Ausdruck:

$$L = \sqrt{(1 + (D-d)^2 \, \pi^2/P^2)} - 1 \qquad (1)$$

definiert wird, eine Ungleichung von 0,1 > L > 0,005 erfüllt, worin sind: D ein Umkreisdurchmesser der geformten Spirale des Stahlelementdrahtes; P eine Ganghöhe; und d der Elementdrahtdurchmesser des Stahlelementdrahtes.


**Revendications**

1. Bandage pneumatique pour un véhicule à deux roues, comprenant : une partie de bande de roulement (11) ; une paire de parties de flanc (12) agencées radialement à l'intérieur du bandage pneumatique, à partir des deux bords de la partie de bande de roulement; des parties de talon (13), s'étendant radialement à l'intérieur du bandage pneumatique par rapport aux parties de flancs ; une couche de carcasse (22), englobant au moins une couche de nappe de carcasse pour renforcer ces parties entre des tringles (21) noyées dans les parties de talon et formées en revêtant de caoutchouc un câblé, formant un angle compris entre 60 et 90° par rapport à un plan équatorial du bandage pneumatique ; et au moins une couche de ceinture en spirale (23), formée à l'extérieur de la couche de carcasse dans la direction radiale du bandage pneumatique, par enroulement en spirale, de sorte à s'étendre de manière pratiquement parallèle à la direction circonférentielle du bandage pneumatique ;
la couche de ceinture en spirale englobant un matériau composite d'acier-caoutchouc formé en noyant un ou plusieurs fils d'acier en spirale (1, 100) dans le caoutchouc, sans torsion mutuelle, le diamètre de fil du fil en acier étant compris dans un intervalle allant de 0,25 mm à 0,60 mm ; **caractérisé en ce que**
la couche de ceinture en spirale comprend un matériau composite d'acier-caoutchouc formé en noyant deux ou plusieurs fils d'acier ayant une forme en spirale dans le caoutchouc, avec pratiquement le même pas, pratiquement dans la même phase mutuelle, sous une forme à liaison mais non pas à torsion mutuelle.

2. Bandage pneumatique pour un véhicule à deux roues selon la revendication 1, dans lequel une contrainte résiduelle Rs d'une partie de couche de surface du fil d'acier correspond à Rs <0.

3. Bandage pneumatique pour un véhicule à deux roues selon l'une quelconque des revendications précédentes, dans lequel des cercles circonscrits de la spirale formée d'un fil défini des fils d'acier et d'au moins un autre fil d'acier se chevauchent mutuellement.

4. Bandage pneumatique pour un véhicule à deux roues selon l'une quelconque des revendications précédentes, dans lequel le diamètre du fil d'acier et l'étendue de formage des deux ou des plusieurs fils d'acier sont tous identiques.

5. Bandage pneumatique pour un véhicule à deux roues selon la revendication 1, dans lequel L, défini par l'expression ci-dessous :

$$L = \sqrt{1 + (D-d)^2 \pi^2/P^2)} - 1 \qquad (1)$$

satisfait une inégalité de 0,1 >L< 0,005, D représentant un diamètre d'un cercle circonscrit de la spirale formée du fil d'acier, P représentant un pas de la spirale et d représentant le diamètre de fil du fil d'acier.

Fig.1

Fig.2

Fig.3

Fig.4

Fig.5

Fig.6

Fig.7

Fig.8

Fig.9

Fig.10

Fig.11

Fig.12

(a)

100

B    A

(b)

COMPRESSION SIDE
(−)

AFTER HAVING DISSOLVED IN
NITRIC ACID (−y mm)

$-y$

BEFORE BEING DISSOLVED IN
NITRIC ACID

$+x$    (LACQUER COATED SIDE)

AFTER HAVING DISSOLVED IN
NITRIC ACID (+x mm)

TENSION SIDE
(+)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5332017 A
- JP 4362402 A
- JP 2001130218 A